(19) Europäisches Patentamt
European Patent Office
Office européen des brevets

(11) **EP 0 645 175 B1**

(12) **EUROPÄISCHE PATENTSCHRIFT**

(45) Veröffentlichungstag und Bekanntmachung des Hinweises auf die Patenterteilung:
**23.12.1998 Patentblatt 1998/52**

(51) Int. Cl.$^6$: **B01D 61/44**

(21) Anmeldenummer: **94114171.5**

(22) Anmeldetag: **09.09.1994**

(54) **Abstandhalter (Spacer) für Dialyse-, Elektrodialyse- oder Elektrolyse-Zellen**

Spacer for dialysis, electrodialysis or electrolysis cells

Entretoise pour des cellules de dialyse, d'électrodialyse ou d'électrolyse

(84) Benannte Vertragsstaaten:
**AT BE CH DE FR GB LI NL**

(30) Priorität: **28.09.1993 DE 4333020**

(43) Veröffentlichungstag der Anmeldung:
**29.03.1995 Patentblatt 1995/13**

(73) Patentinhaber:
**FRAUNHOFER-GESELLSCHAFT ZUR FÖRDERUNG DER ANGEWANDTEN FORSCHUNG E.V.**
**80636 München (DE)**

(72) Erfinder:
• **Bauer, Bernd, Dipl.-Chem.**
  **D-66130 Fechingen (DE)**
• **Menzel, Thomas, Dipl.-Ing.**
  **D-70567 Stuttgart (DE)**
• **Kehl, Petra, Dipl.-Ing.**
  **D-70199 Stuttgart (DE)**

(56) Entgegenhaltungen:
EP-A- 0 503 651          WO-A-82/03994
FR-A- 2 292 504          GB-A- 877 239
GB-A- 936 616            US-A- 4 804 451

**Beschreibung**

Die Erfindung betrifft ionenleitfähige Abstandhalter (Spacer) für Dialyse-, Elektrodialyse oder Elektrolyse-Zellen.

Bei dem Membrantrennverfahren der Elektrodialyse ist stets das Ziel, aus einer Rohlösung ein Diluat und ein Konzentrat zu schaffen, wobei sowohl Diluat als auch Konzentrat als Produktstrom betrachtet werden können.

Bei Entsalzungen, wie z.B. bei der Brackwasserentsalzung, bei der Enthärtung von Kesselwasser oder Brauchwasser, bei der Vollentsalzung von Leitungswasser, oder bei der Abtrennung von Schwermetallen aus Prozeßwässern galvanischer Bäder ist das Diluat als Produktstrom zu betrachten. Hierbei wird allgemein eine maximale Abreicherung angestrebt. Dies führt jedoch zu einem Absinken der elektrischen Leitfähigkeit des Diluatkreislaufes und zu einem Anstieg des elektrischen Widerstandes. Damit steigen mit zunehmender Entsalzung die Prozeßkosten und die maximal erlaubten Stromdichten sinken, woraus eine Erhöhung der Investitionskosten (Membrankosten) resultiert.

Vergleichbare Probleme ergeben sich bei der elektrodialytischen Abtrennung wenig leitfähiger, wenig beweglicher, wenig dissoziierter oder höher molekularer Verbindungen aus wässrigen Lösungen. Typische Beispiele hierfür sind die Abtrennung schwacher organischer Säuren oder Aminosäuren, die Entsalzung von Molke oder die Denitrifikation von Trinkwasser mittels konventioneller Elektrodialyse.

Eine weitere allgemeine, und für die Elektrodialyse mit bipolaren Membranen typische Problemstellung ergibt sich aus der Tatsache, daß im sauren bzw. basischen Konzentrat eine Protonierung bzw. Deprotonierung statt findet, die bei nicht vollständig dissoziierten Verbindungen zu einem Absinken der Leitfähigkeit führt. Beispiel hierfür ist die Abtrennung von Ammoniumsalzen bzw. von schwachen organischen Säuren. Diese werden in der jeweiligen Konzentratkammer neutralisiert und liegen damit in nicht leitfähiger Form vor. Dies ist etwa bei der Abtrennung von Ammoniumlactat aus einer Fermentation der Fall.

Bei der Anwendung bipolarer Membrantechnik zur Abtrennung wenig dissoziierter Komponenten resultiert somit ein hoher Ohm'scher Widerstand in wenigstens einer der beiden Konzentratkammern. Die Zugabe von polymeren Leitelektrolyten zur Minderung des Ohm'schen Widerstandes ist für den Langzeitbetrieb ungeeignet.

Der Energiebedarf einer elektrodialytischen Abtrennung ist proportional dem dazu erforderlichen elektrischen Strom und proportional dem Widerstand einer sich wiederholenden Einheit, und es gilt die folgende Beziehung:

$$E_{pr} = I^2 \cdot n \cdot R \cdot t = \frac{I \cdot n \cdot R \cdot t \cdot z \cdot F \cdot Q \cdot \Delta C}{\xi}$$

| I | Strom | [A] |
|---|---|---|
| R | elektr. Widerstand eines Zellpaares | [W] |
| n | Zahl der Zellen in einem Stapel | [-] |
| t | Zeit | [h] |
| F | Faradaykonstante | $26.8 \ Ah \cdot eq^{-1}$ |
| z | elektrochemische Wertigkeit | [-] |
| Q | Volumenstrom der Rohlösung | $[m^3 \cdot h^{-1}]$ |
| $\Delta C$ | Konzentrationsdifferenz zwischen der Roh- und der Produktlösung | $[eq \cdot l^{-1}]$ |
| $\xi$ | Stromausbeute | [-] |

Damit wird deutlich, daß die Wirtschaftlichkeit von Elektrodialyseanlagen im Wesentlichen durch die hydrodynamischen Eigenschaften der Abstandhalter (Spacer) in den einzelnen Kammern bestimmt wird. Die Anforderungen, die an solche Spacer gestellt werden, sind:

- die mechanische Abstützung der Membran, um deren Beschädigung durch zu hohe Druckunterschiede zwischen den Kammern zu verhindern;
- die Erhaltung der Kammergeometrie bzw. einer konstanten Kammerhöhe;
- die Gewährleistung einer gleichmäßigen Durchströmung der Kammer und einer guten hydrodynamischen Durchmischung senkrecht zu den Membranen, um die anhaftende laminare Grenzschicht zu verringern;

• die Vermeidung von hydrodynamischen Druckverlusten.

Herkömmliche Spacer sind inaktive, d.h. nicht ionenleitfähige Gewebe, die ein weitmaschiges Netz bilden. Da ein inaktiver Spacer die Membranfläche desaktiviert, d.h. die Membran abschattet, ist eine minimale Kontaktfläche mit der Membran erwünscht.

Ferner ist es erstrebenswert, den elektrischen Widerstand in der Kammer, d.h. zwischen den Membranen zu verringern. Dies wird durch ein Befüllen der Kammer mit Ionenaustauscherharz erreicht. Die optimalsten Ergebnisse werden dabei mit einer dichtesten Packung monodisperser Harze, bzw. mit einem Gemisch zweier monodisperser Harze unterschiedlicher Größe erreicht. Im zuletzt genannten Fall füllt dabei das eine Harz die Lücken der dichten Kugelpackung des anderen Harzes aus.

Mit einer solchen Anordnung sind jedoch die oben genannten hydrodynamischen Anforderungen, d.h. die mechanische Abstützung der Membran, die Erhaltung der Kammergeometrie, die Gewährleistung einer gleichmäßigen Durchströmung der Kammer und die Vermeidung von hydrodynamischen Druckverlusten nicht zu erfüllen. Außerdem werden die Kammern gezwungenermaßen dicker, was zu einer Erhöhung des Gesamtwiderstandes führt.

Der Zellwiderstand wird durch den Widerstand der Membranen, der Diluatkammer und der Grenzschicht und durch den Abschirmeffekt der Spacer bestimmt. Bei geringen Konzentrationen im Diluat jedoch wird eine praktische Anwendung der Elektrodialyse durch den hohen Ohm'schen Widerstand der Diluatkammer und durch eine zusätzlich starke Polarisation begrenzt. Es gibt keine Möglichkeit, eine Polarisation, d.h. einen Wechsel der Transportzahlen an der laminaren Grenzschicht, zu verhindern. Eine Verringerung der Polarisation ist jedoch durch eine Verminderung der Stromdichte erreichbar, und wird durch die Verwendung ionenleitfähiger Spacer ermöglicht. Dabei scheint der wesentliche Effekt aus einer Vergrößerung der Oberfläche zwischen Ionenaustauschermembranen und der Lösung zu resultieren. Bei geeigneter Geometrie sollte gleichzeitig die Dicke der laminaren Grenzschicht verringert werden. Die Abreicherung der laminaren Grenzschicht erfolgt in Systemen mit ionenleitfähigen Spacern in gleicher Weise, jedoch wird im Gegensatz zur konventionellen Elektrodialyse der Strom über eine größere Oberfläche verteilt, und damit die Stromdichte verringert. Der Grenzstrom wird damit durch die gesamte Spacerfläche und die Dicke der laminaren Schicht um die Spacer bestimmt. Mittels ionenleitfähiger Spacer kann so für Kesselspeisewasser eine Entsalzung auf kleiner 25 ppm Gesamtionengehalt erreicht werden.

Zusätzlich zu den oben genannten Anforderungen werden deshalb an ionenleitfähige Spacer noch folgende Bedingungen gestellt:

• Die Leitfähigkeit des Spacers/Harzes sollte größer sein als die Leitfähigkeit der umgebenden Lösung.

$$\theta = \frac{\sigma_{\text{mit ionenleitfähigem Spacer}}}{\sigma_{\text{neutraler Spacer}}} \gg 10$$

Für $\theta < 1$ erfolgt der Stromfluß vorwiegend über die Lösung und die Ionen werden erst unmittelbar vor der Membran über den Spacer transportiert. Bei geringen Stromdichten wird der Ionen-Transport direkt aus der Lösung in die Membran erfolgen, bei höheren Stromdichten dagegen übernehmen die ionenleitfähigen Spacer den Stromtransport.

• Der Spacer sollte die austauschenden Gruppen des weniger beweglichen Ions der Lösung tragen.

• Der Kontakt des Spacers zur Membran sollte maximal sein.

• Um an den Kontaktstellen von anionen- und kationenselektivem Gewebe keine Wasserspaltung zu erhalten, sollte der Spacer eine hohe Oberfläche besitzen, dünn sein und weit in die Kammer reichen. Eine Durchkontaktierung beider Membranen sollte jedoch verhindert werden, da dort kein Austausch von generiertem $H^+$ und $OH^-$ gegen Kationen und Anionen erfolgen kann.

• Die Leitfähigkeit der Diluatkammer sollte mindestens so groß sein, daß in einem offenen Stack keine Strom-Verluste über die Anströmkanäle möglich sind.

Kedem et al. beschreiben in "EDS - Sealed Cell Electrolysis" eine Methode zur Herstellung von mit Anionenaustauscherharz gefüllten Taschen aus Polyethylenmembranen. Die verschweißte Einheit besteht aus einem 0.4 mm dicken Spacer zwischen zwei heterogenen PE-Membranen. Nachteil dieser Taschen ist jedoch, daß die Hydrodynamik nur unzureichend erfüllt ist, sodaß keine isotrope Durchströmung der Ionenaustauscherpackung gewährleistet wird, und gleichermaßen ein hoher Druckabfall über die Kammer akzeptiert werden muß. Weiterhin treten in Ionenaustauscherharzen typischerweise starke Volumenänderungen infolge einer beladungsabhängigen Quellung auf, die in den verschweißten Taschen nicht ausgeglichen werden können.

Desweiteren wurde als ionenleitfähiger Spacer ein oberflächenmodifiziertes, kationenselektives Gewebe an die Kationenaustauschermembran und ein anionenselektives Gewebe an die Anionenaustauschermembran gelegt. Es hat sich jedoch gezeigt, daß oftmals die ausschließliche Verwendung eines anionenselektiven Gewebes ausreicht, da die Beweglichkeit der Anionen meist geringer ist als die der Kationen und damit als geschwindigkeitsbestimmender Schritt der elektrodialytischen Abtrennung zu betrachten ist. Zur Herstellung wird ein multifilamentöses Netz mit einem vernetzten Anionenaustauscher beschichtet. Nachteilig ist jedoch, daß das weitmaschige Gewebe keinen ausreichenden Kontakt zu den Austauschermembranen hat, und daß die Ionenleitfähigkeit nicht im ausreichenden Maß erhöht wurde.

Bei einer elektrodialytischen Vollentsalzung kann durch einen weiteren störenden Nebeneffekt die Stromausbeute, und damit die Wirtschaftlichkeit des Verfahrens stark herabgesetzt werden, da hier in den benachbarten Kammern stark unterschiedlich konzentrierte Lösungen geführt werden. Dabei sind in allen kommerziell verfügbaren Elektrodialyse-Stacks die das Diluat und das Konzentrat führende Kanäle direkt benachbart. Dies führt zu dem als innere Leckage bezeichneten Problem von konvektiven Leckströmen vom Konzentrat in das Diluat und umgekehrt. Bei üblichen Trennproblemen sind innere Leckagen zwar nicht vermeidbar, aber meist zu vernachlässigen. Bei Vollentsalzungen dagegen kann ein Leckstrom von 1 ‰ bereits die Entsalzungsleistung äquilibrieren. Da innere Leckagen meist durch unvollständige Abpressung zwischen Membran und äußerer Dichtung auftreten, sollten sie durch zusätzliche Dichtungsmaßnahmen zu vermeiden sein.

In der FR-A-2292504 ist ein Material beschrieben, das ein sulfochloriertes bzw. hydrolysiertes aminiertes Gewebe aus Polyethylen-Fäden darstellt. Dieses Material besitzt zwar ionenleitfähige Eigenschaften, es ist dem Dokument jedoch nicht zu entnehmen, daß die Fäden porös sind.

Aufgabe der vorliegenden Erfindung ist es deshalb, ionenleitfähige Abstandhalter (Spacer) bereit zu stellen, die gleichzeitig sowohl die Anforderungen bzgl. der elektrischen als auch bzgl. der mechanischen bzw. hydrodynamischen Eigenschaften erfüllen, d.h.

- die die mechanische Abstützung der Membran gewährleisten,
- die die Erhaltung der Kammergeometrie bzw. einer konstanten Kammerhöhe sicher stellen,
- die eine gleichmäßige Durchströmung der Kammer und eine gute hydrodynamische Durchmischung senkrecht zu den Membranen garantieren,
- die hydrodynamische Druckverluste vermeiden,
- die eine höhere Leitfähigkeit als die umgebende Lösung besitzen,
- die einen maximalen Kontakt zur Membran aufweisen, und
- die bei gleichzeitiger Verhinderung einer Durchkontaktierung beider Membranen, eine hohe Oberfläche besitzen, dünn sind und weit in die Kammer reichen.

Ferner sollen die Spacer durch einen allgemeinen und leicht realisierbaren Produktionsprozeß herstellbar sein.

Desweiteren soll es möglich sein, das Problem der inneren Leckage an technischen Elektrodialyse-Moduln zu beheben. Bei der Elektrodialyse und insbesondere bei der Elektrodialyse mit bipolaren Membranen wird aus einem verdünnten Diluatstrom ein hochleitfähiger Konzentratstrom erzeugt. Diese Kreisläufe werden im Elektrodialyse-Stapel durch mehrere benachbarte Anströmkanäle getrennt voneinander geführt. Konvektive Durchmischungen infolge einer inneren Leckage zwischen den Anströmkanälen würden der elektrodialytischen Separation entgegenwirken und so die Produktlösungen verunreinigen bzw. die Stromausbeute drastisch erniedrigen.

Gelöst wird diese Aufgabe durch flächige und poröse Gebilde gemäß Anspruch 1.

Überraschenderweise wurde festgestellt, daß derartige Abstandhalter alle oben genannten, gewünschten Anforderungen bzgl. elektrischer und mechanischer bzw. hydrodynamischer Eigenschaften erfüllen. Die Forderung nach einer maximal hohen Oberfläche der Spacer bei minimalen hydrodynamischen Druckverlusten schien zunächst widersprüchlich, konnte aber erfindungsgemäß durch die Herstellung makroporöser Spacer gelöst werden, wobei die erfindungsgemäßen Spacer ionenaustauschende Eigenschaften aufweisen.

Nach dem Stand der Technik, d.h. in der Praxis, werden große Membranflächen mit niedrigen Stromdichten verwendet. Dies ist jedoch aus wirtschaftlicher Sicht höchst unbefriedigend. Mit Hilfe der erfindungsgemäßen Spacer ist es nun möglich, mit kleineren Membranflächen bei höheren Stromdichten zu arbeiten. Dies bringt große wirtschaftliche Vorteile mit sich. Die reduzierte Membranfläche wird dabei durch die Ionenleitfähigkeit der erfindungsgemäßen Spacer ausgeglichen, d.h., der erfindungsgemäße Spacer wird quasi als zusätzliche Membranfläche betrachtet. Mit Hilfe der erfindungsgemäßen Spacer wird die Festionenkonzentration erhöht, woraus eine Steigerung der Ionenleitfähigkeit resultiert. Es ist sogar möglich geworden, die Ionenleitfähigkeit der Diluatkammer derjenigen der Membran anzugleichen.

Der elektrische Gesamtwiderstand R einer Membran ergibt sich aus

$$R = \rho \frac{l}{A}$$

mit ρ = spezifischer Widerstand
l = Dicke der Membran
A = Fläche der Membran

Durch die Mikroporosität der erfindungsgemäßen Spacer wird die Membranfläche A scheinbar erhöht und damit der Gesamtwiderstand R reduziert.

Bevorzugte Ausführungsformen der erfindungsgemäßen Spacer weisen Porendurchmesser zwischen 80 und 180 Å auf, und/oder Dicken zwischen $3 \cdot 10^{-3}$ und $5 \cdot 10^{-4}$ m.

Weitere bevorzugte Ausführungsformen der erfindungsgemäßen Spacer bestehen aus Keramik oder aus einem organischen Polymer, wobei thermoplastische Polymere ganz besonders bevorzugt sind. Ohne Einschränkung der Allgemeinheit sind bevorzugte organische Polymere Polypropylen, Polyethylen, Polysulfon, Polyethersulfon, Polyphenylenoxid, Polyphenylensulfid, Polyetherketon, Polyetheretherketon, Polyetheretherketonketon, Polystyrol oder eine Mischung derselben.

Weitere bevorzugte Ausführungsformen der erfindungsgemäßen Spacer enthalten als anionische Gruppen schwach basische sekundäre oder tertiäre Amino-Gruppen, stark basische quartäre Ammonium-Gruppen, stark basische quartäre Phosphonium-Gruppen oder tertiäre Sulfonium-Gruppen oder eine Mischung derselben.

Bei weiteren bevorzugten Ausführungsformen der erfindungsgemäßen Spacer sind die kationischen Gruppen stark saure Sulfonsäure-Gruppen oder Methylensulfonsäure-Gruppen, schwach saure Carboxyl-Gruppen oder Phosphonium-Gruppen, saure arsenische oder saure selenische Gruppen oder eine Mischung derselben.

Die erfindungsgemäßen Spacer können aus Hohlfasermembranen bestehen, die nach bekannten Methoden mit anionischen und/oder kationischen Gruppen modifiziert wurden und zu einem Gewebe verarbeitet sind.

Desweiteren können die erfindunsgemäßen Spacer ein mit anionischen und/oder kationischen Gruppen modifiziertes Gewebe sein, das aus porösen und/oder nicht-porösen Polymerfäden und/oder -hohlfäden besteht.

Ebenso ist es möglich, daß die erfindungsgemäßen Spacer aus porösen und/oder nicht-porösen Polymerfäden und/oder Polymerhohlfäden bestehen, die nach bekannten Methoden mit anionischen und/oder kationischen Gruppen modifiziert wurden und zu einem Gewebe verarbeitet sind.

Weitere Ausführungsformen der erfindungsgemäßen Spacer bestehen aus einem porösen Polymerfilm, der nach bekannten Methoden mit anionischen und/oder kationischen Gruppen modifiziert ist.

Ebenso ist es möglich, daß kommerzielle Ionenaustauschermembranen erfindungsgemäß zu makroporösen, ionenleitfähigen Spacern verarbeitet werden.

Desweiteren können poröse Filtrationsmembranen nach bekannten Methoden mit anionischen und/oder kationischen Gruppen modifiziert und erfindungsgemäß als Spacer eingesetzt werden.

Bei weiteren Ausführungsformen der erfindungsgemäßen Spacer sind diese außerhalb der effektiven Membranfläche mit einer Dichtung versehen, die bevorzugt aus einem Elastomer, aus einem Transferklebeband, oder aus einem thermoplastischen Polymer besteht.

Die Herstellung der erfindungsgemäßen Spacer kann auf vielfältige Art und Weise geschehen. So ist es z.B. möglich, Hohlfasermembranen nach bekannten Methoden mit anionischen und/oder kationischen Gruppen zu modifizieren und diese dann nach üblichen Verfahren zu einem Gewebe zu verarbeiten.

Ebenso ist es möglich, die Hohlfasermembranen zuerst zu einem Gewebe zu verarbeiten, und dieses dann anschließend nach bekannten Verfahren mit anionischen und/oder kationischen Gruppen zu modifizieren.

Desweiteren kann ein Gemisch aus einem oder mehreren thermoplastischen Polymeren aus der Gruppe der olefinischen Polymere, der Kondensations- und der Oxidationspolymere durch thermische Fällung nach bekannten Verfahren zu Fäden oder Hohlfäden verformt werden. Diese Fäden oder Hohlfäden werden dann nach üblichen Methoden mit anionischen und/oder kationischen Gruppen modifiziert, und die modifizierten Fäden oder Hohlfäden zu Geweben verarbeitet.

Ebenso ist es möglich, ein Gemisch aus einem oder mehreren thermoplastischen Polymeren aus der Gruppe der olefinischen Polymere, der Kondensations- und der Oxidationspolymere durch thermische Fällung nach bekannten Verfahren zu Fäden oder Hohlfäden zu verformen, die resultierenden Fäden oder Hohlfäden zu Geweben zu verarbeiten, und die resultierenden Gewebe nach üblichen Methoden mit anionischen und/oder kationischen Gruppen zu modifizieren.

Es können aber auch bereits mit anionischen und/oder kationischen Gruppen modifizierte thermoplastische Polymere aus der Gruppe der olefinischen Polymere, der Kondensations- und der Oxidationspolymere eingesetzt werden. Diese werden dann durch thermische Fällung zu Fäden oder Hohlfäden verformt, und die resultierenden Fäden oder Hohlfäden zu Geweben verarbeitet.

Bei den drei letzt genannten Varianten kann die thermische Fällung der thermoplastischen Polymere unter Zugabe von porenbildenden Komponenten durchgeführt werden. Solche porenbildenden Komponenten zeichnen sich durch eine temperaturabhängige Mischungslücke im binären Phasendiagramm mit dem Polymeren aus, d.h. sie sind z.B. bei erhöhter Temperatur homogen mit der Polymerschmelze mischbar, entmischen sich jedoch beim Abkühlen oberhalb des Schmelzpunktes. Die Porenbildner sollten thermisch stabil bis zur Extrusionstemperatur und gegenüber dem Polymeren chemisch inert sein. Für Polypropylen und Polyethylen sind z.B. Paraffine, Fettamine und höhermolekulare Seifen geeignet.

Weitere Herstellungsverfahren der erfindungsgemäßen Spacer bestehen in einer Naß/Naß- oder in einer Trokken/Naß-Phaseninversion. Dabei können entweder noch nicht modifizierte, thermoplastische Polymere oder Mischungen davon eingesetzt werden oder bereits mit anionischen und/oder mit kationischen Gruppen modifizierte thermoplastische Polymere, jeweils aus der Gruppe der olefinischen Polymere, der Kondensations- und der Oxidationspolymere. Dabei werden homogene Lösungen der Polymere oder von Mischungen derselben nach bekannten Verfahren durch Naß/Naß- oder durch Trocken/Naß-Phaseninversion zu Polymerfilmen verarbeitet. Werden nicht modifizierte Polymere eingesetzt, so wird der resultierende Polymerfilm anschließend nach üblichen Methoden mit anionischen und/oder mit kationischen Gruppen modifiziert.

Ebenso ist es möglich, poröse Filtrationsmembranen nach bekannten Verfahren mit anionischen und/oder mit kationischen Gruppen zu modifizieren.

Desweiteren können die erfindungsgemäßen Spacer in Elektrolysezellen eingesetzt werden. Bei der konventionellen Elektrolyse verursacht die Bildung von Gasblasen an Elektrodenoberflächen oder Gitternetzen häufig unerwünschte Nebeneffekte. Beispielsweise führt eine wachsende Einzelblase zu einer erheblichen Vergrößerung des Spannungsabfalls und damit zur lokalen Bildung von Wärmegradienten, die, falls sie nicht abgebaut werden, Verbrennungen "Hot Spots" zur Folge haben können. Diese Blasen wachsen schneller bei höheren Stromdichten und bei höheren Temperaturen, wobei ein rascheres Blasenwachstum einen größeren Ablöseradius bewirkt.

Die Ablösung von Gasblasen ist ein typisches Stoffaustauschproblem und damit mikroskopisch von der Oberflächenbeschaffenheit des Materials und makroskopisch von der Elektrolytströmung abhängig. Der Stofftransport im makroskopischen Bereich läßt sich durch die Geschwindigkeit und die Art der Zwangskonvektion beeinflussen und wird insbesondere im Bereich sehr hoher Stromdichten dominant. Bei kleineren Stromdichten jedoch wird der Stofftransport durch Oberflächenvorgänge bestimmt. Dabei lösen sich Gasblasen aus Vertiefungen der Oberfläche, deren Öffnungsradius größer als der Gleichgewichtsradius ist, und für den minimalen Radius ($R_{min}$) gilt:

$$R_{min} = \frac{2\sigma}{H(T) \cdot \Delta X}$$

$\sigma$ = Oberflächenspannung
$H(T)$ = Henry Konstante
$\Delta X$ = Übersättigung

Aus der Literatur ist zu entnehmen, daß eine hydrodynamische Optimierung, beispielsweise der Spacer-Geometrie, nur eine begrenzte Verbesserung der elektrochemischen Eigenschaften einer Elektrolyse- oder Elektrodialyse-Einheit zuläßt. Ein verbesserter Austrag der Gasblasen ist durch Senken der Oberflächenspannung $\sigma$ des Spacermaterials zu erwarten. Um dies nach dem Stand der Technik zu erreichen, wird die Oberfläche eines kommerziellen Spacermaterials durch chemische Funktionalisierung, durch Beschichten oder durch Plasmamodifikation hydrophilisiert. Durch den Einsatz der erfindungsgemäßen Spacer in Elektrolysezellen wird auch dieses Problem gelöst.

Anhand von Ausführungsbeispielen wird die Herstellung der erfindungsgemäßen Spacer näher erläutert.

Beispiel 1:

Eine PP-Mikrofiltrationshohlfasermembran (Accurel® von ENKA) wird durch Sulfochlorierung zu einer Ionenaustauschermembran funktionalisiert und zu einem Gewebe weiterverarbeitet.

Beispiel 2:

Eine 17 %-ige Lösung von Polyethersulfon mit sulfoniertem Polyetheretherketon ($1.10\ meq \cdot g^{-1}$) im Verhältnis 1:1 in N-Methylpyrrolidon mit Propionsäure (2:1) wird zu einem Faden oder Hohlfaden gesponnen und in Wasser koaguliert. Die Weiterverarbeitung erfolgt auf einer Webmaschine.

Beispiel 3:

Eine 17 %-ige Lösung von Polyethersulfon mit chlormethyliertem Polysulfon im Verhältnis 1:1 in N-Methylpyrrolidon wird zu einem Faden oder Hohlfaden gesponnen und in Wasser koaguliert. Danach wird das poröse Material in einer wäßrigen Lösung von DABCO (1.4-Diazabicyclo-[2.2.2]octan) quaternisiert. Die Weiterverarbeitung erfolgt auf einer Webmaschine.

Beispiel 4:

Eine 15 %-ige Lösung von radikalisch seitenkettenbromiertem Polyphenylenoxid in N-Methylpyrrolidon wird zu einem Faden oder Hohlfaden gesponnen und in Wasser koaguliert. Danach wird das poröse Material in einer wäßrigen Lösung von DABCO (1.4-Diazabicyclo-[2.2.2]octan) quaternisiert. Die Weiterverarbeitung erfolgt auf einer Webmaschine.

Beispiel 5:

Eine 16 %-ige Lösung von sulfoniertem Polyetheretherketon (0.75 meq $\cdot$ g$^{-1}$) in N-Methylpyrrolidon wird zu einem Faden oder Hohlfaden gesponnen und in Wasser koaguliert. Die Weiterverarbeitung erfolgt auf einer Webmaschine.

**Patentansprüche**

1. Ionenleitfähiger Abstandhalter für Dialyse-, Elektrodialyse- oder Elektrolyse-Zellen in Form eines flächigen, porösen Gebildes, das eine Dicke zwischen $10^{-2}$ und $10^{-4}$ m aufweist und das aus einem mit anionischen und/oder kationischen Gruppen funktionalisierten Gewebe besteht, **dadurch gekennzeichnet,** daß das Gewebe poröse Polymerfäden und/oder Hohlfasermembranen aufweist, und daß der Porendurchmesser der porösen Polymerfäden und/oder Hohlfasermembranen zwischen 1 und 100 nm liegt.

2. Abstandhalter nach Anspruch 1, **dadurch gekennzeichnet**, daß die Porendurchmesser zwischen 8 und 18 nm liegen.

3. Abstandhalter nach Anspruch 1 oder 2, **dadurch gekennzeichnet**, daß die Dicke zwischen $3 \cdot 10^{-3}$ und $5 \cdot 10^{-4}$ m liegt.

4. Abstandhalter nach einem oder mehreren der Ansprüche 1 bis 3, **dadurch gekennzeichnet**, daß das Polymer ein thermoplastisches Polymer ist.

5. Abstandhalter nach Anspruch 4, **dadurch gekennzeichnet**, daß das Polymer ein Polypropylen, ein Polyethylen, ein Polysulfon, ein Polyethersulfon, ein Polyphenylenoxid, ein Polyphenylensulfid, ein Polyetherketon, ein Polyetheretherketon, ein Polyetheretherketonketon, ein Polystyrol oder eine Mischung derselben ist.

6. Abstandhalter nach einem oder mehreren der Ansprüche 1 bis 5, **dadurch gekennzeichnet**, daß die anionischen Gruppen schwach basische sekundäre und/oder tertiäre Amino-Gruppen und/oder stark basische quartäre Ammonium-Gruppen und/oder stark basische quartäre Phosphonium-Gruppen und/oder tertiäre Sulfonium-Gruppen sind.

7. Abstandhalter nach einem oder mehreren der Ansprüche 1 bis 6, **dadurch gekennzeichnet**, daß die kationischen Gruppen stark saure Sulfonsäure-Gruppen und/oder Methylensulfonsäure-Gruppen und/oder schwach saure Carboxyl-Gruppen und/oder Phosphonium-Gruppen und/oder saure arsenische und/oder saure selenische Gruppen sind.

8. Abstandhalter nach einem oder mehreren der Ansprüche 1 bis 7, **dadurch gekennzeichnet**, daß er außerhalb der effektiven Membranfläche mit einer Dichtung versehen ist.

9. Abstandhalter nach Anspruch 8, **dadurch gekennzeichnet**, daß die Dichtung aus einem Elastomer besteht.

10. Abstandhalter nach Anspruch 8, **dadurch gekennzeichnet**, daß die Dichtung aus einem Transferklebeband besteht.

11. Abstandhalter nach Anspruch 8, **dadurch gekennzeichnet**, daß die Dichtung aus einem thermoplastischen Polymer besteht.

12. Verfahren zur Herstellung von Abstandhaltern nach einem oder mehreren der Ansprüche 1 bis 11, **dadurch gekennzeichnet**, daß man Hohlfasermembranen mit Porendurchmessern zwischen 1 und 100 nm nach bekannten Verfahren mit anionischen und/oder kationischen Gruppen modifiziert, und daß man die modifizierten Hohlfasermembranen zu einem Gewebe mit einer Dicke zwischen $10^{-2}$ und $10^{-4}$ m verarbeitet.

13. Verfahren zur Herstellung von Abstandhaltern nach einem oder mehreren der Ansprüche 1 bis 11, **dadurch gekennzeichnet**, daß man Hohlfasermembranen mit Porendurchmessern zwischen 1 und 100 nm zu einem Gewebe mit einer Dicke zwischen $10^{-2}$ und $10^{-4}$ m verarbeitet, und daß man das Gewebe nach bekannten Verfahren mit anionischen und/oder kationischen Gruppen modifiziert.

14. Verfahren zur Herstellung von Abstandhaltern nach einem oder mehreren der Ansprüche 1 bis 11, **dadurch gekennzeichnet**, daß man ein Gemisch aus einem oder mehreren thermoplastischen Polymeren aus der Gruppe der olefinischen Polymere, Kondensations- und Oxidationspolymere durch thermische Fällung zu Fäden oder Hohlfäden mit Porendurchmessern zwischen 1 und 100 nm verformt, daß man die Fäden oder Hohlfäden nach bekannten Verfahren mit anionischen und/oder kationischen Gruppen modifiziert, und daß man die modifizierten Fäden oder Hohlfäden zu einem Gewebe mit einer Dicke zwischen $10^{-2}$ und $10^{-4}$ m verarbeitet.

15. Verfahren zur Herstellung von Abstandhaltern nach einem oder mehreren der Ansprüche 1 bis 11, **dadurch gekennzeichnet**, daß man ein Gemisch aus einem oder mehreren thermoplastischen Polieren aus der Gruppe der olefinischen Polymere, Kondensations- und Oxidationspolymere durch thermische Fällung zu Fäden oder Hohlfäden mit Porendurchmessern zwischen 1 und 100 nm verformt, daß man die Fäden oder Hohlfäden zu einem Gewebe mit einer Dicke zwischen $10^{-2}$ und $10^{-4}$ m verarbeitet, und daß man das Gewebe nach bekannten Verfahren mit anionischen und/oder kationischen Gruppen modifiziert.

16. Verfahren zur Herstellung von Abstandhaltern nach einem oder mehreren der Ansprüche 1 bis 11, **dadurch gekennzeichnet**, daß man ein Gemisch aus einem oder mehreren mit anionischen und/oder kationischen Gruppen modifizierten thermoplastischen Polymeren aus der Gruppe der olefinischen Polymere, Kondensations- und Oxidationspolymere durch thermische Fällung zu Fäden oder Hohlfäden mit Porendurchmessern zwischen 1 und 100 nm verformt, und daß man die Fäden oder Hohlfäden zu einem Gewebe mit einer Dicke zwischen $10^{-2}$ und $10^{-4}$ m verarbeitet.

17. Verfahren nach Anspruch 14, 15 oder 16, **dadurch gekennzeichnet**, daß man die thermoplastischen Polymere unter Zugabe von porenbildenden Komponenten verarbeitet.

**Claims**

1. Ion-conductive spacer for dialysis, electrodialysis or electrolysis cells in the form of a two-dimensional,

   porous structure, which has a thickness between $10^{-2}$ and $10^{-4}$ m and which consists of a mesh produced with anionic and/or cationic groups,
   **characterised in that**
   the mesh has porous polymer fibres and/or hollow fibre membranes, and
   in that the pore diameter of the porous polymer fibres and/or hollow fibre membranes lies between 1 and 100 nm.

2. Spacer according to Claim 1,
   **characterised in that**,

   the pore diameters lie between 8 and 18 nm.

3. Spacer according to Claims 1 or 2,
   **characterised in that**

   the thickness lies between $3 \times 10^{-3}$ and $5 \times 10^{-4}$ m.

4. Spacer according to one or several of the Claims 1 to 3,
   **characterised in that**

   the polymer is a thermoplastic polymer.

5. Spacer according to Claim 4,
   **characterised in that**

   the polymer is polypropylene, polyethylene, polysulphone, polyethersulphone, polyphenylenoxide, polyphenylensulphide, polyetherketone, polyetheretherketone, polyetheretherketoneketone, polystyrene or a mixture of the same.

6. Spacer according to one or several of the claims 1 to 5,
   **characterised in that**

   the anionic groups are weak alkaline secondary and/or tertiary amino groups and/or strong alkaline quaternary ammonium groups and/or strong alkaline quaternary phosphonium groups and/or tertiary sulphonium groups.

7. Spacer according to one or several of the Claims 1 to 6,
   **characterised in that**

   the cationic groups are strong acidic sulphone acid groups, and/or methylene sulphone acidic groups and/or weak acidic carboxyl groups and/or phosphonium groups and/or acidic arsenic and/or acidic selenium groups.

8. Spacer according to one or several of the Claims 1 to 7,
   **characterised in that**

   it is provided with a seal outwith the effective membrane.

9. Spacer according to Claim 8,
   **characterised in that**

   the seal consists of an elastomer.

10. Spacer according to Claim 8,
    **characterised in that**

    the seal consists of a transfer adhesive tape.

11. Spacer according to Claim 8,
    **characterised in that**

    the seal consists of a thermoplastic polymer.

12. Method for producing spacers according to one or several of the Claims 1 to 11,
    **characterised in that**

    hollow fibre membranes with pore diameters between 1 and 100 nm are modified, according to known methods, with anionic and/or cationic groups and
    in that the modified hollow fibre membranes are made into a mesh with a thickness between $10^{-2}$ and $10^{-4}$ m.

13. Method for producing spacers according to one or several of Claims 1 to 11,
    **characterised in that**

    hollow fibre membranes with pore diameters between 1 and 100 nm are made into a mesh with a thickness between $10^{-2}$ and $10^{-4}$ m.

14. Method for producing spacers according to one or several of the Claims 1-11,
    **characterised in that**

    a mixture from one or several thermoplastic polymers from the group of olefinic polymers, condensation- and oxidation- polymers is formed by thermal precipitation into fibres or hollow fibres with pore diameters between 1 and 100 nm,

in that the fibres or hollow fibres are modified according to known methods with anionic and/or cationic groups and in that the modified fibres or hollow fibres are made into a mesh with a thickness between $10^{-2}$ and $10^{-4}$ m.

15. Method for producing spacers according to one or several of the Claims 1 to 11,
**characterised in that**

a mixture of one or several thermoplastic polymers from the group of olefinic polymers, condensation- and oxidation- polymers is formed by thermal precipitation into fibres or hollow fibres with pore diameters between 1 and 100 nm,
in that the fibres or hollow fibres are made into a mesh with a thickness of $10^{-2}$ and $10^{-4}$ m, and
in that the mesh is modified according to known methods with anionic and/or cationic groups.

16. Method for producing spacers according to one or several of Claims 1 to 11,
**characterised in that**

a mixture of one or several thermoplastic polymers, which have been modified with anionic and/or cationic groups, from the group of olefinic polymers, condensation- and oxidation- polymers are formed by thermal precipitation into fibres or hollow fibres with pore diameters between 1 and 100 nm, and
in that the fibres or hollow fibres are made into a mesh with a thickness between $10^{-2}$ and $10^{-4}$ m.

17. Method according to Claim 14, 15 or 16,
**characterised in that**

the thermoplastic polymers are made by adding pore-forming components.

**Revendications**

1. Entretoise ioniquement conductrice pour des cellules de dialyse, d'électrodialyse ou d'électrolyse sous la forme d'une structure plane poreuse, qui présente une épaisseur comprise entre $10^{-2}$ et $10^{-4}$ m et qui est constituée d'une toile fonctionnalisée avec des groupes anioniques et/ou cationiques,
caractérisée en ce que
la toile présente des fils de polymère poreux et/ou des membranes à fibres creuses comprises entre 1 et 100 nm.

2. Entretoise selon la revendication 1,
caractérisée en ce que
les diamètres de pores sont compris entre 8 et 18 nm.

3. Entretoise selon la revendication 1 ou 2,
caractérisée en ce que
l'épaisseur est comprise entre $3.10^{-3}$ et $5.10^{-4}$ nm.

4. Entretoise selon l'une ou plusieurs des revendications 1 à 3,
caractérisée en ce que
le polymère est un polymère thermoplastique.

5. Entretoise selon la revendication 4,
caractérisée en ce que
le polymère est un polypropylène, un polyéthylène, une polysulfone, un polyéthersulfone, un polyphénylèneoxyde, un polyphénylènesulfure, un polyéthercétone, un polyétheréthercétone, un polyétheréthercétonecétone, un polystyrène ou un de leurs mélanges.

6. Entretoise selon l'une ou plusieurs des revendications 1 à 5,
caractérisée en ce que
les groupes anioniques sont des groupes amino secondaires et/ou tertiaires faiblement basiques et/ou des groupes d'ammonium quaternaire fortement basiques et/ou des groupes de phosphonium quaternaires fortement basiques et/ou des groupes sulfonium tertiaires.

7. Entretoise selon l'une ou plusieurs des revendications 1 à 6,

caractérisée en ce que
les groupes cationiques sont des groupes d'acide sulfurique fortement acides et/ou des groupes méthylènesulfoniques et/ou des groupes carboxyles faiblement acides et/ou des groupes phosphonium et/ou des groupes acides arséniques et/ou des groupes acides sélénoiques.

8. Entretoise selon l'une ou plusieurs des revendications 1 à 7,
caractérisée en ce qu'
elle est munie d'un joint, en dehors de la surface efficace de membrane.

9. Entretoise selon la revendication 8,
caractérisée en ce que
le joint est en élastomère.

10. Entretoise selon la revendication 8,
caractérisée en ce que
le joint est un ruban adhésif transfert.

11. Entretoise selon la revendication 8,
caractérisée en ce que
le point est en polymère thermoplastique.

12. Procédé de fabrication d'entretoises selon l'une ou plusieurs des revendications 1 à 11,
caractérisé en ce qu'
on modifie des membranes de fibres creuses à diamètres de pores compris entre 1 et 100 nm selon des procédés connus avec des groupes anioniques et/ou cationiques et qu'on transforme les membranes à fibres creuses modifiées en une toile qui a une épaisseur comprise entre $10^{-2}$ et $10^{-4}$ m.

13. Procédé de production d'entretoises selon l'une ou plusieurs des revendications 1 à 11,
caractérisé en ce qu'
on transforme des membranes à fibres creuses à diamètres de pores compris entre 1 et 100 nm en une toile ayant une épaisseur comprise entre $10^{-2}$ et $10^{-4}$ m et qu'on modifie la toile selon des procédés connus avec des groupes anioniques et/ou cationiques.

14. Procédé de production d'entretoises selon l'une ou plusieurs des revendications 1 à 11,
caractérisé en ce qu'
on forme un mélange d'un ou plusieurs polymères thermoplastiques du groupe des polymères oléfiniques, des polymères de condensation et d'oxydation par précipitation thermique en fils ou en fils creux ayant des diamètres de pores compris entre 1 et 100 nm, qu'on modifie les fils ou fils creux selon des procédés connus avec des groupes anioniques et/ou cationiques et qu'on transforme les fils ou les fils creux modifiés en une toile ayant une épaisseur comprise entre $10^{-2}$ et $10^{-4}$ m.

15. Procédé de production d'entretoises selon l'une ou plusieurs des revendications 1 à 11,
caractérisé en ce qu'
on forme un mélange d'un ou plusieurs polymères thermoplastiques du groupe des polymères oléfiniques, des polymères de condensation et d'oxydation par précipitation thermique en fils ou fils creux avec des diamètres de pores compris entre 1 et 100 nm, qu'on transforme les fils ou fils creux en une toile ayant une épaisseur comprise entre $10^{-2}$ et $10^{-4}$ m et qu'on modifie la toile selon des procédés connus avec des groupes anioniques et/ou cationique.

16. Procédé de production d'entretoises selon l'une ou plusieurs des revendications 1 à 11,
caractérisé en ce qu'
on forme un mélange d'un ou plusieurs polymères thermoplastiques modifiés par des groupes anioniques et/ou cationiques du groupe des polymères oléfiniques, des polymères de condensation et d'oxydation par précipitation thermique en fils ou fils creux avec des diamètres de pores compris entre 1 et 100 nm, qu'on transforme les fils ou fils creux en une toile ayant une épaisseur comprise entre $10^{-2}$ et $10^{-4}$ m.

17. Procédé selon la revendication 14, 15 ou 16,
caractérisé en ce qu'

on transforme les polymères thermoplastiques en ajoutant des composants formant des pores.